# EUROPEAN PATENT SPECIFICATION

(11) **EP 0 665 548 B1**
(45) Date of publication and mention of the grant of the patent: **29.08.2001**
(21) Application number: 94203758.1
(22) Date of filing: 23.12.1994
(51) Int. Cl.: G11B 21/00, G11B 21/21, G11B 21/22, G11B 33/14, G11B 5/58

(54) **Hard disk drives**
Festplattenantriebe
Entraînements de disques durs

(30) Priority: 31.12.1993 KR 9331792
(43) Date of publication of application: 02.08.1995
(73) Proprietor: Samsung Electronics Co., Ltd., Suwon-city, Kyungki-do 441-370 (KR)
(72) Inventor: Lee, Hae-Joong, Suwon-city, Kyungki-do (KR); Jeong, Myung-Chan, Suwon-city, Kyungki-do (KR)
(74) Representative: Tunstall, Christopher Stephen

(56) References cited:
- EP-A- 0 383 551
- EP-A- 0 501 477
- GB-A- 2 073 934
- US-A- 4 188 645
- US-A- 4 651 242
- PATENT ABSTRACTS OF JAPAN vol. 010 no. 348 (P-519) ,22 November 1986 & JP-A-61 148681 (NIPPON TELEGR & TELEPH CORP) 7 July 1986,
- PATENT ABSTRACTS OF JAPAN vol. 018 no. 587 (P-1824) ,10 November 1994 & JP-A-06 215433 (MITSUBISHI ELECTRIC CORP) 5 August 1994,
- PATENT ABSTRACTS OF JAPAN vol. 014 no. 114 (P-1015) ,2 March 1990 & JP-A-01 311481 (SONY CORP) 15 December 1989,

## Description

The present invention relates to hard disk drives and more particularly, but not exclusively, to a method and apparatus for axial control and outside impact resistance of a hard disk drive (HDD).

The trend of the technology for the HDD has recently become high-capacity and light-weight. Therefore, the track pitch and the bit cell of the disk of the HDD has become more minute. As a result, high-precision technology regarding the control of the servo and the read/write has been devised. The technology basically required for this is to maintain the head at a constant minute flying height (less than 0.8*µ*m) from the top side of the disk in the overall area of the disk.

The reason why the head has to be maintained at the minute flying height from the disk is to stabilize signals generated at the time of the read/write operation. The stabilization of the signals at the time of the read/write operation is attained when the servomechanism performs the high precision control.

An example of the prior art will now be described with reference to the accompanying diagrammatic drawings, in which:-
Figure 1 is a schematic perspective view showing an example of the configuration to connect the head suspension (105) with swing arm (103) and install passive element (165);
Figure 2 is a schematic plan view seen in the direction (the front) of "10" in Figure 1;
Figure 3 is a schematic plan view illustrating the reasons why there exists the constant flying height (CFH) between the head (161) and disk (106) of Figure 2; and
Figure 4 is a schematic perspective view of the head (161) of Figure 3.

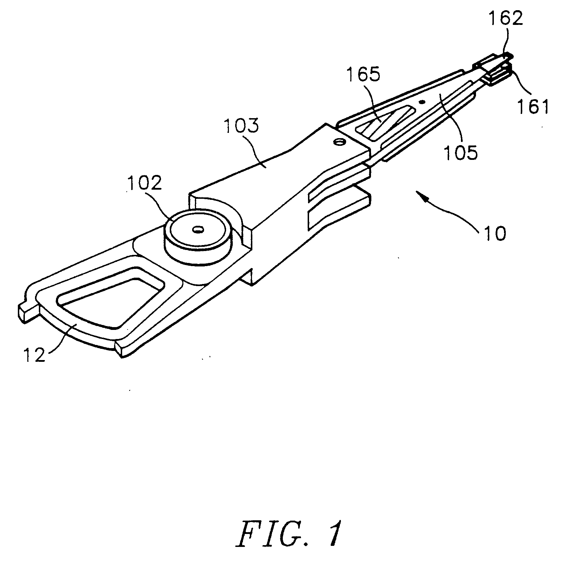

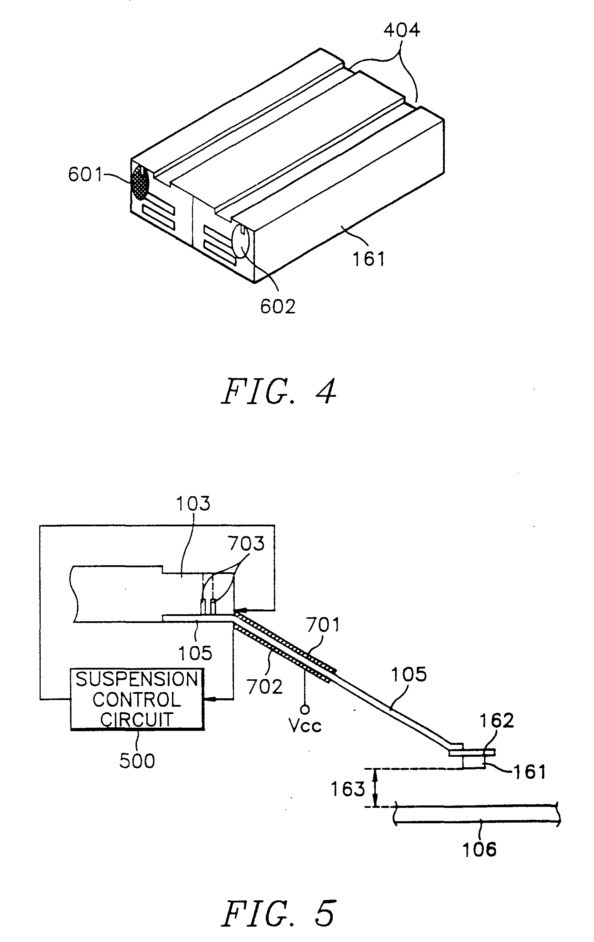

The constant minute flying height is described by referring to Figure 1-Figure 4. A head 161 illustrated in Figure 4 is attached to a gimbal 162 at the end of a suspension 105 attached to a swing arm 103 as illustrated in Figure 1. The swing arm 103 makes a rotary motion on a disk centering around a pivot bearing axis 102 through the control of electric current of a voice coil motor VCM and the head 161 becomes able to read or write the data after being transferred to the desired position on a disk 106 as illustrated in Figure 3 according to the rotary motion. Then, the head 161 has a constant flying height 163 from the surface of disk 106 as illustrated in Figure 3, for the stabilization of the read/write process.

The head 161, to which transducers 601 and 602 are attached is used to read and write the data from the disk as illustrated in Figure 4 and the main body, to which this can be attached is also referred to as a head slider.

Accordingly, the head 161 and the head slider can be named as the same depending upon the case.

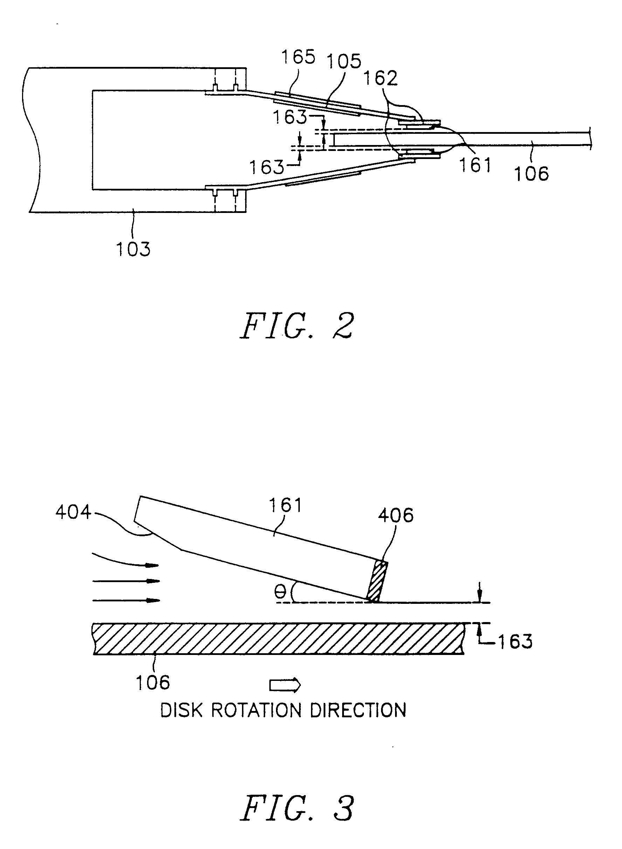

The head 161 is attached to a remote end of suspension 105 in the form of a plate spring of stainless steel material, by the gimbal 162, and the suspension 105 is attached to the swing arm 103 as illustrated again in Figure 2.

Figure 2 shows a case that on the upper and lower sides of one disk 106, two heads 161 are attached to swing arm 103 by gimbals 162 through the suspension 105. When the HDD is not operating, the head 161 stays safely in the safety area where there is no data on the surface of disk 106 as illustrated in Figure 2, and when the HDD operates, the head 161 is flown to the constant flying height 163 by the rotation air current of the spindle motor spinning disk 106.

The configuration combining the head 161 and the suspension 105 is referred to as a head gimbals assembly HGA.

Each head 161 illustrated in Figure 2 is attached to the suspension 105 by an ultrathin plate spring gimbal 162. The flying of the heads 161 attached to the gimbals 162 is carried out with a predetermined slope ( θ ) as illustrated in Figure 3.

A transducer 601 of Figure 4 is located at the trailing edge of the head 161, which writes the signals on the surface of disk 106 and reads the signals from the surface of the disk 106. The flying height (hereinafter to as "FH") 163 of the head 161 is the interval between the trailing edge of the head 161 and the surface of disk 106 as illustrated in Figure 3.

The principle of flying is caused by a dynamic pressure of the air formed between the surface of disk 106 and the surface of the head 161 when the disk 106 rotates.

The flying surface of the head 161 is referred to as an air bearing surface ABS and the flying begins when the head 161 receives a lifting force after the ABS includes a taper in the air entry portion.

Figure 4 shows the ABS of the taper flat type head 161 and the thin film inductive type transducer 601. However, one of two transducers 601 and 602 is not used.

It is possible to maintain the desired CFH under a steady state of the motion of the HDD due to the change of the ABS shape of the head 161, but it becomes impossible to maintain the desired CFH under an unsteady state.

The reason why it is impossible to maintain the desired CFH under the unsteady state is that there is no way to compensate for the problems such as the change of the FH resulting from a twisting transformation at the resonant frequency of the suspension 105 of the HGA, the change of the FH resulting from axial non-repeatable runout NRRO of the spindle motor and collision of the surfaces of disk 106 and of the head 161 resulting from external impact to the HDD. Compensation for the axial dynamic disturbance of the spindle motor like this eventuality requires a way to control the FH, i.e. the axial displacement of the spindle motor.

As conventional technology for the control of the CFH, there is the U. S. Patent No. 5,012,369 allowed to "owe" on April 30, 1991.

The "owe" patent has installed a pressing member which is engaged with a load beam for the control of the CFH at the head suspension 105 and maintaining the desired CFH with the spring plate and an adjusting screw, but has not provided a way to compensate for the problem of the head 161 colliding with the surface of disk 106.

In another conventional example, a thin leaf, passive damper 165 is attached to the upper part of suspension 105 in order to reduce the displacement amplitude occurring due to the resonant frequency of suspension 105 and the safe arrival of the head 161 as illustrated in Figure 2, but it is difficult to maintain the desired active CFH in accordance with the motion state because the passive damper 165 has no further function than as a passive element.

Therefore, preferred embodiments of the present invention aim to provide a method and apparatus which can ensure the stabilization of the read/write signals by continuously enabling the maintenance of a desired constant flying height CFH of a head in both steady and unsteady operation states of an HDD by installing an active element controlling the axial head displacement relative to a spindle motor at a suspension of the HDD.

Another aim is to provide an apparatus for the improvement of the access time of an HDD by stabilizing the initial settlement of a track following mode as soon as possible with a use of an active damper.

Still another aim is to provide an apparatus which can replace a head at a track position prior to a seek mode when a flying height FH is confirmed as steady, after first retracking the head in a safety area of a disk during the performance of the read/write operation when an external impact is delivered beyond a certain threshold.

According to one aspect of the present invention, there is provided a method for controlling the separation of a head carried on one end of a flexible suspension of a hard disc drive from the surface of a disk, the method comprising:
sensing bending of the suspension, caused by a change in said separation, at a first actuator positioned on one side of said suspension at a certain distance remote from said head;
generating a control signal in response to said sensed bending; and
applying said control signal to a second actuator, to compensate for said sensed bending and maintain said separation; wherein
said second actuator is positioned at the other side of the suspension at substantially the same distance remote from said head as said first actuator.

Preferably, the method comprises:
amplifying an output signal from the first actuator;
calculating an error value from the difference between the amplified output signal and an FH offset value;
delay or truth compensating the error value by detecting a phase difference between the error value and a previous value; and
amplifying the compensated error signal to generate the said control signal.

Preferably, the method comprises:
amplifying an output signal from the first actuator;
digitising the amplified output signal;
proportional-integrating the difference between the digitised signal and an FH offset value and combining at a constant ratio the integrated value; and
generating the said control signal by analogising and amplifying the combined integrated difference value.

According to a further aspect of the present invention, there is provided an apparatus for controlling the separation of a head carried on one end of a flexible suspension of a hard disc drive from the surface of a disk, comprising:
a first actuator positioned on one side of said suspension at a certain distance remote from said head for sensing bending of the suspension caused by a change in said separation;
a second actuator on said suspension remote from said head;
means for generating a control signal in response to said sensed bending and applying said control signal to the second actuator, to compensate for said sensed bending and maintain said separation; wherein
said second actuator is positioned at the other side of the suspension at substantially the same distance remote from said head as said first actuator.

Preferably, the apparatus comprises:
an amplification circuit for amplifying and outputting an output signal from the first actuator;
error value calculating means for calculating an error value from the difference between the output of said amplification circuit and an FH offset value;
a signal truth-delay compensator for truth-delay compensating the output of said error value calculating means; and
an amplifier for amplifying the output of said signal truth-delay compensator to provide the said control signal.

Preferably, the means for generating a control signal comprises:
an amplification circuit for amplifying and outputting an output signal from the first actuator;
an A/D converter for digitising the output signal of said amplification;
error value calculating means for calculating an error value from the difference between the output of said A/D converter and an FH offset value;
a digital PID controller for generating an adjustment signal from the output of said error value calculating means;
a D/A converter for converting the output of said digital PID controller into an analogue signal; and
a second amplifying circuit for amplifying the output of the D/A converter to provide the said control signal.

Preferably, the first actuator comprises a piezoelectric polymer attached to the upper side of said suspension.

Preferably, the second actuator comprises a piezoelectric ceramic attached to the lower side of said suspension.

Preferably, said head is of the taper flat type.

It can therefore be seen that the embodiments of the invention relate to an impact resistant apparatus and its method by way of an axial control of a hard disk drive continuously maintaining a head at a constant flying height (CFH) under an unsteady state by way of the control of an active element after equipping a head suspension with the active element for the stabilization of signals read/written on a disk.

For a better understanding of the invention, and to show how embodiments of the same may be carried into effect, reference will now be made, by way of example, to the accompanying diagrammatic drawings, in which:
Figure 5 is a block diagram illustrating the control of a head suspension (105) of an embodiment of this invention;

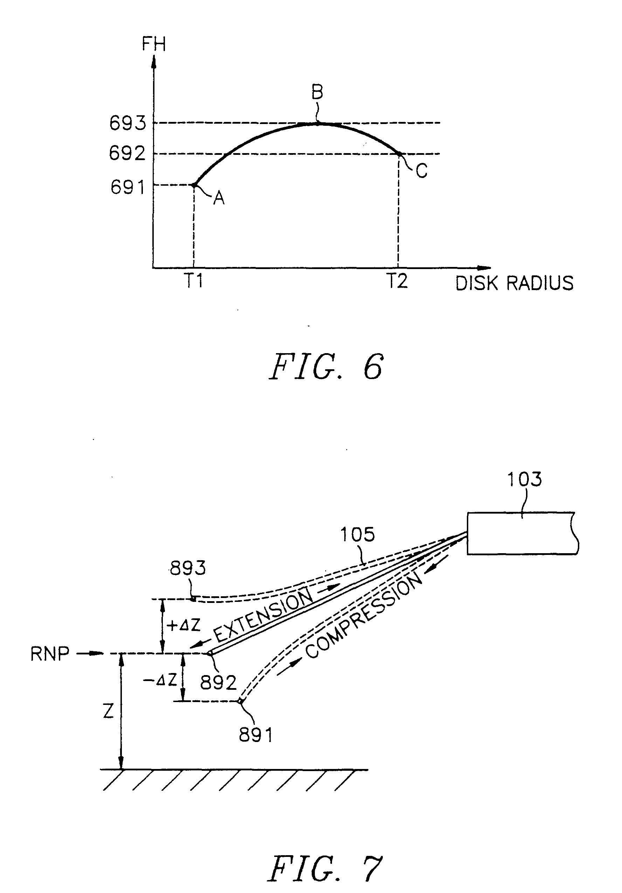

Figure 6 is a curve diagram of FH change when using a rotary-type voice coil motor (VCM);
Figure 7 is a schematic elevation view illustrating the state returning to the reference null position (RNP) in accordance with the tension/ compression of suspension (105);

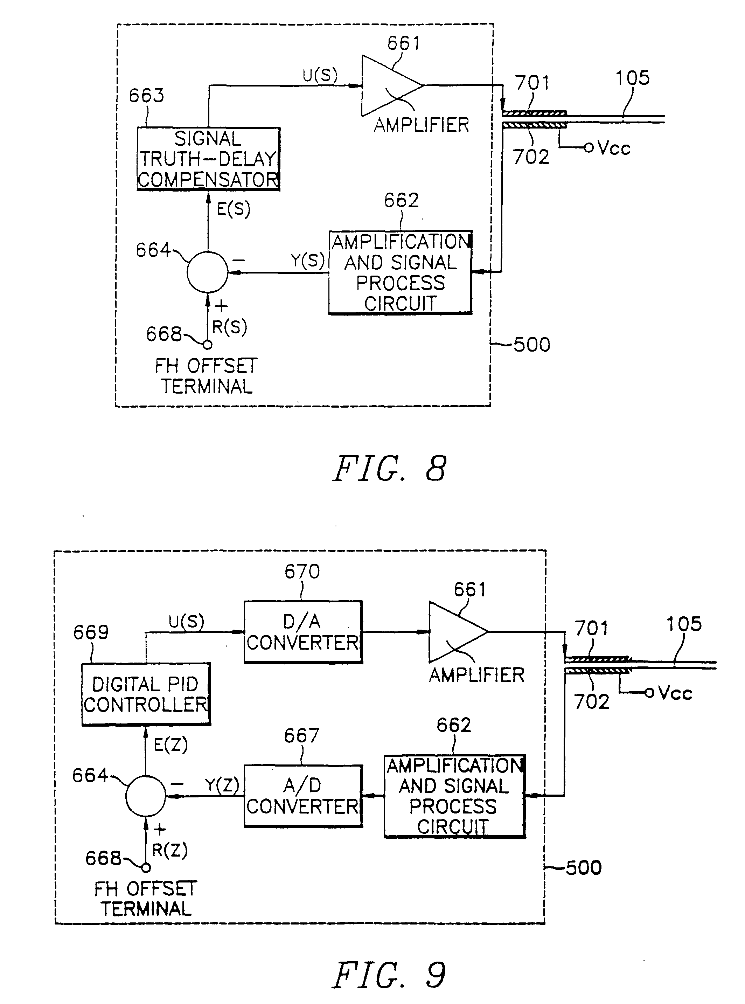

Figure 8 is a circuit diagram illustrating a suspension control circuit (500) of Figure 5 in detail;
Figure 9 is a block diagram illustrating another embodiment of the suspension control circuit (500) of Figure 5;

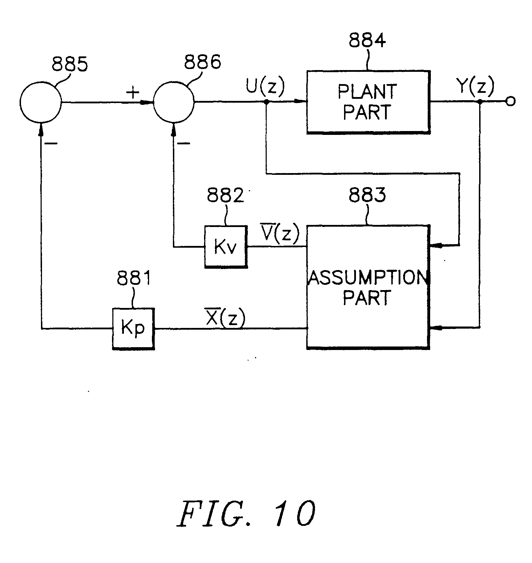

Figure 10 is a block diagram illustrating another embodiment of the present invention, which is an illustration diagram for the problem treatment of LQR with the use of assumption part (883), by employing a signal processor.

Figure 5 is a block diagram for the maintenance of the CFH of the HDD in accordance with an example of this invention, and it should be noted that the elements the same as and having the same function as those in Figures 1 - 4 in the drawing are represented with the same numbers.

The minute displacement in accordance with the tension and the compression of the suspension 105 following the FH change of the head 161 is compensated by attaching a first actuator 701 of a piezoelectric ceramic to the upper part of suspension 105 where it is connected with the swing arm 103, and a sensor function to detect the minute displacement is provided in order to maintain the desired CFH between the head 161 and the disk 106 by attaching a second actuator 702 of a piezoelectric polymer to the lower part of the suspension 105 where it is connected to the swing arm 103. The output for the compensation of the appropriate displacement of suspension 105 is generated by inputting the compression or tension change detection value of the suspension 105 detected at the second actuator 702 to a suspension control circuit 500. The desired CFH can be maintained by applying a compensation value to the first actuator 701.

In particular, the second actuator 702 plays a role similar to a strain gauge, which can detect the state of suspension 105 because an electric current from the power supply of the power source voltage Vcc is changed due to the change of resistance value in accordance with the tension or compression of suspension 105.

In order to maintain the CFH of the HDD, the first and second actuators 701 and 702 of the sensor which are active elements for the control of the axial head displacement relative to the spindle motor should have the characteristics satisfying the following:

Primarily, its dynamic disturbance should be of a rapid response; secondly, its maximum control displacement should be less than 0.1 micron (axial); thirdly, its minimum control displacement should be more than 0.1 micron (axial) and fourthly, it should be made of light material not influencing the VCM inertia.

Additionally, the attaching locations of the first and second actuators 701 and 702 should be the upper and lower parts of the end of the suspension 105 where it is connected to the swing arm. However, they should be installed very flexibly in the axial direction of the spindle motor and the locations as near to the head 161 as possible should be selected.

The configuration of the first and second actuators 701 and 702 attached to the suspension 105 should be made in order to function adequately as the sensor detecting the minute change of suspension 105 due to the FH change of the head 161.

Figure 6 is a curve diagram of the FH change at the time of using the rotary-type VCM; the horizontal axis represents the radius of the disk and the vertical axis represents the state of the FH change.

Figure 7 illustrates the state of the suspension 105 and FH changes in accordance with the tension and compression of the first actuator 701 attached to the upper end of suspension 105.

Figure 8 shows a detailed circuit of the suspension control circuit 500 of the suspension 105 in accordance with this example of the invention, which is comprised of an amplification and signal process circuit 662 outputting the change value of the tension or compression of the suspension 105 detected at the second actuator 702 after the amplification and signal process. An error value extraction device extracts an error value [E(s)] after comparing a current FH offset value input into an FH offset terminal 668 and the output value of the amplification and signal process circuit 662. A signal truth-delay compensator 663 compensates for the phase delay or the truth of the signals from the output value of the error value extraction device, and an amplifier 661 amplifies the output of the signal truth-delay compensator 663 to provide the amplified output to the first actuator 701.

Figure 9 is a diagram illustrating another embodiment of the control of suspension 105 in accordance with an example of this invention. In particular, while Figure 8 uses an analog method, Figure 9 uses a digital method, and is comprised of an A/D converter 667 digitalizing the output signal of the amplification and signal process circuit 662 for the digital process, and an error value extraction part 664 extracting the error value after comparing the FH offset value applied into the FH offset terminal 668 and the output of the A/D converter 667. A digital PID controller 669 digitally controls the output of the error value extraction part 664 and generates an adjustment signal after summing up the controlled output in the proper ratio following differentiation and integration, and a D/A converter 670 converts the output of the digital PID controller 669 to provide the converted analog signal to the amplifier 661.

Figure 10 is a diagram illustrating the concept to solve LQR problems by way of using assumption part 883 after zerorizing the FH offset value through a calculation at the signal process part processing the measurement signal from the first and second actuators 701 and 702 under the reference null position RNP of the head in Figure 8 and Figure 9.

Details regarding assumption part 883 and the LQR design are described in detail on pages 250-271 and 442-444 of the reference book ("Digital Control of Dynamic Systems" G.F.Franklin, et al. 2nd ed, 1990. Addison Wesley).

The piezoelectric ceramic or the piezoelectric polymer used as the first and second actuators 701 and 702 is extended according to its piezoelectric characteristics if an electric field is added, which is a principle generally known, as clarified in page 196 of "Examples and Basis of Application Laser Guide" published by the domestic "Electric and Electronic Research Institute" on September 5, 1985.

The illustrated detailed preferred embodiments of the present invention will now be explained in further detail by referring to Figure 1-Figure 10.

As illustrated in Figure 7, no displacement change is detected in accordance with the sensing result value at the first and second actuators 701 and 702 of the suspension 105 in the state of normal flying 892. However, when the FH of the head 161 increases, a transformation caused by the tension is detected at the lower part of suspension 105, i.e the sensing part of the second actuator 702 if the FH is changed by bending of suspension 105 as shown by reference numeral "893" of Figure 7. That is, the second actuator 702 detects the tension due to the distortion of suspension 105 because the piezoelectric polymer thereof acts as a strain gauge. The tension detection value is input to suspension control circuit 500 of Figure 8 or Figure 9 and performs the control so that a reverse tensile force following the tensile force detection of suspension 105 can be generated from the FH offset value input to FH offset terminal 668.

To control of the reverse tensile force of suspension 105, the suspension control circuit 500 amplifies the tensile force detected at the second actuator 702 through amplification and signal process circuit 662. The output signal [Y(s)] of the amplification and signal process circuit 662 is subtracted at a subtractor 664 from the FH offset value [R(s)] input to FH offset terminal 668 and the error value [E(s)] is obtained from the subtracted difference value. The compensation following the delay or the truth is made by the comparison with the previous signal at the signal delay-truth compensator 663. The output of the signal delay-truth compensator 663 is provided to the first actuator 701 of piezoelectric ceramic after amplification at the amplifier 661. Because of this, the first actuator 701 generates the reverse tensile force in order to return to the RNP as illustrated in Figure 7. On the other hand, when the FH of the head 161 is decreased as shown by reference numeral "891" of Figure 7, the sensing part of the second actuator 702 generates the compression transformation detection value. If this value is also input to the suspension control circuit 500, the reverse compressive force is applied to the first actuator 701 in order to return to the RNP in the same process way as above.

The FH change due to the change of suspension 105 as above in case that the rotary-type VCM is used is shown in the same way as the FH change in case that a taper flat type of the head 161 is used as illustrated in the Figure 6.

As illustrated in Figure 6, the FH change increases in the outside radial direction of disk 106 primarily because the change of the motive pressure occurs in accordance with the difference of the linear velocity of disk 106 on the inner and outer tracks. However, in the case of the rotary-type VCM, the FH change curve in the same type as Figure 6 is obtained eventually because the bigger skew angle due to the change of the head skew angle between the center-line of the head 161 and the normal line of the track results in the decrease of the FH on the outermost track.

The read/write signal amplitude of the transducer 601 in Figure 4 is very sensitive to the change of the FH. For example, in case of the design of constant density reading CDR, it is essential to maintain the constant flying height CFH of the head 161 on the whole data track. Therefore, the maintenance of the head 161 at the constant flying height CFH from the surface of disk 106 on the whole data section requires a series of developments through the change of the ABS shape of the head 161, i.e. TPC (Transverse Pressure Contours) TAB (Trirail Air Bearing ) and NPAB (Negative Pressure Air Bearing).

Accordingly, it is possible to use a taper flat type of the head 161 standardized in the normal operation state for the HDD of this invention, even without using the head slider for the CFH taking advantage of the specific ABS shape for the maintenance of the CFH on the whole data track section, which is the requirement of CDR design.

The reason for this is that the continuous maintenance of the desired CFH becomes possible under the active compensation of the dynamic disturbance from the HDD inside and outside by suspension control circuit 500, which is the detection of the tension or compression state of suspension 105 from the first and second actuators 701 and 702 installed at the suspension 105 even in the abnormal operation states of the HDD such as the following:
A. FH change by the resonance in the self-resonant frequency of the HGA suspension.
B. FH change by the axial NRRO of the spindle motor.
C. FH change due to the external impact of the HDD.

On the other hand, the piezoelectric polymer sensor of the second actuator 702 also serves to protect the data by preventing the collision of the head 161 and disk 106 due to external impact. This can help to strengthen the impact resistance of the HDD specially in accordance with the miniaturizing trend of the HDD, which can place the head 161 in the safety area without the data on disk 106 beyond a certain impact by installing a sensor for the detection of external acceleration on the PCB and protect the data safely by the impact resistance, like "Safe-Rite HDD" of "Segate Co." of U.S.A. along with the design of the devices of the HDD.

The piezoelectric polymer sensor of the second actuator 702 can be used for the same purpose as mentioned above.

That is, when the FH change of the head 161 occurs due to external impact beyond a certain threshold, the servo control of this invention can first retract the head 161 performing the read or write into the safety area of the disk and replace the head 161 at the track location prior to a seek mode after the confirmation that the FH is normal.

The control of the VCM is divided into the seek mode and the track following mode, as well-known in the HDD design: The seek mode represents the VCM control mode transferring the head 161 from the currently located track to the track of the target location and the track following mode represents the VCM control mode that the head 161 becomes the read/write function at the center of the track of the target location. Then, there is a settling characteristic of the head 161 as an important control function while the seek mode changes to the track following mode. The sooner the settling of the head 161 occurs, the faster the practical performance of the read/write becomes. At this moment, the radial settling can be improved with the VCM control, but only limited improvement of the axial settling is possible with a passive damper attached to the upper part of suspension 105. However, the access time of the HDD can be improved by stabilizing the initial settling of the track following mode as soon as possible with the active damper according to the piezoelectric ceramic/polymer of the first and second actuators 701 and 702 of this invention.

Though it has not been taken as an example in the practical illustrations of this invention, whoever has the ordinary knowledge of this field within the category of the technological idea of embodiments of this invention can realize the technological idea of embodiments of this invention with the method to be described below. That is, another great advantage gained by applying the actuator using the piezoelectric element to the suspension or the flexible arm is to solve problems such as the increase of the frictional force and the wear which can occur due to the contact of the head and the disk at the time of the start and stop of the HDD by separating the head 161 and disk 106 after applying the necessary power source to the actuator before and after the start and stop of the disk, not currently used in the contact start-stop method of the head and the disk.

Furthermore, the head of the HDD is set to have as constant and low an FH as possible depending upon the upgrade of the capability and the purpose of the high-capacity. However, it is known that in the methods currently used for this embodiment, there are various methods to adjust the pressure distribution in accordance with the fluid current between the ABS (Air Bearing Surface) of the head and the disk, but there is a problem that the start load of the spindle motor increases or that loss of the data results from the increase of the frictional force due to wear because the head and the disk are contacted, in the event that the spindle motor does not rotate at constant velocity at the time of the start or stop.

However, this invention can solve the defect due to the contact of the head and the disk by utilizing the actuator of the piezoelectric element from the start of the disk until the rotation of the constant velocity and from the rotation of the constant velocity until the time right after the stop and by separating the head and the disk after applying the power source so that the compressive force can be generated to the actuator attached to the upper part of the suspension.

## Claims

1. A method of controlling the separation of a head (161) carried on one end of a flexible suspension (105) of a hard disc drive from the surface of a disk (106), the method comprising:
sensing bending of the suspension (105), caused by a change in said separation, at a first actuator (701) positioned on one side of said suspension (105) at a certain distance remote from said head;
generating a control signal in response to said sensed bending; and
applying said control signal to a second actuator (702), to compensate for said sensed bending and maintain said separation;
**characterised in that** said second actuator (702) is positioned at the other side of the suspension at substantially the same distance remote from said head as said first actuator (701).

2. A method according to claim 1 comprising:
amplifying an output signal from the first actuator (701);
calculating an error value from the difference between the amplified output signal and an FH offset value;
delay or truth compensating the error value by detecting a phase difference between the error value and a previous value; and
amplifying the compensated error signal to generate the said control signal.

3. A method according to claim 1 comprising:
amplifying an output signal from the first actuator (701);
digitising the amplified output signal;
proportional-integrating the difference between the digitised signal and an FH offset value and combining at a constant ratio the integrated value; and
generating the said control signal by analogising and amplifying the combined integrated difference value.

4. Apparatus for controlling the separation of a head (161) carried on one end of a flexible suspension (105) of a hard disc drive from the surface of a disk, comprising:
a first actuator (701) positioned on one side of said suspension (105) at a certain distance remote from said head for sensing bending of the suspension (105) caused by a change in said separation;
a second actuator (702) on said suspension (105) remote from said head (161);
means for generating a control signal in response to said sensed bending and applying said control signal to the second actuator (702), to compensate for said sensed bending and maintain said separation;
**characterised in that** said second actuator (702) is positioned at the other side of the suspension (105) at substantially the same distance remote from said head (101) as said first actuator (701).

5. Apparatus according to claim 4 in which the means for generating a control signal comprises:
an amplification circuit for amplifying and outputting an output signal from the first actuator (701);
error value calculating means for calculating an error value from the difference between the output of said amplification circuit and an FH offset value;
a signal truth-delay compensator for truth-delay compensating the output of said error value calculating means; and
an amplifier for amplifying the output of said signal truth-delay compensator to provide the said control signal.

6. Apparatus according to claim 4 in which the means for generating a control signal comprises:
an amplification circuit for amplifying and outputting an output signal from the first actuator (701) ;
an A/D converter (667) for digitising the output signal of said amplification;
error value calculating means for calculating an error value from the difference between the output of said A/D converter (667) and an FH offset value;
a digital PID controller (669) for generating an adjustment signal from the output of said error value calculating means;
a D/A converter (670) for converting the output of said digital PID controller (669) into an analogue signal; and
a second amplifying circuit for amplifying the output of the D/A converter (670) to provide the said control signal.

7. Apparatus according to any one of claims 4-6 in which said first actuator (701) comprises a piezoelectric polymer attached to the upper side of said suspension (105).

8. Apparatus according to any one of claims 4-7 in which said second actuator (702) comprises a piezoelectric ceramic attached to the lower side of said suspension (105).

9. Apparatus according to any one of claims 4-8 in which said head (161) is of the taper flat type.

## Patentansprüche

1. Verfahren zur Steuerung der Entfernung eines Kopfes (161), der an einem Ende von einer elastischen Aufhängung (105) von einem Festplattenantrieb gehalten ist, von der Oberfläche einer Platte (106), wobei das Verfahren umfaßt:
Erfassen der Biegung der Aufhängung (105), die durch eine Veränderung der Entfernung bewirkt wird, an einem ersten Stellglied (701), das an einer Seite der Aufhängung (105) mit einem bestimmten Abstand von dem Kopf entfernt angeordnet ist;
Erzeugen eines Steuersignals in Reaktion auf die erfaßte Biegung; und
Zuführen des Steuersignals an ein zweites Stellglied (702), um die erfaßte Biegung auszugleichen und die Entfernung aufrechtzuerhalten;
**dadurch gekennzeichnet**, daß das zweite Stellglied (702) an der anderen Seite der Aufhängung mit im wesentlichen dem gleichen Abstand von dem Kopf entfernt angeordnet ist wie das erste Stellglied (701).

2. Verfahren nach Anspruch 1, mit:
Verstärken eines Ausgangssignals von dem ersten Stellglied (701) ;
Berechnen eines Fehlerwertes aus der Differenz zwischen dem verstärkten Ausgangssignal und einem FH-Offset-Wert;
Verzögerungs- oder Wahrheitskompensation des Fehlerwertes durch Erfassen einer Phasendifferenz zwischen dem Fehlerwert und einem vorhergehenden Wert; und
Verstärken des kompensierten Fehlersignals, um das Steuersignal zu erzeugen.

3. Verfahren nach Anspruch 1, mit:
Verstärken eines Ausgangssignals von dem ersten Stellglied (701);
Digitalisieren des verstärkten Ausgangssignals;
Proportional-Integrieren der Differenz zwischen dem digitalisierten Signal und einem FH-Offset-Wert sowie Kombinieren des integrierten Wertes bei einem konstanten Verhältnis; und
Erzeugen des Steuersignals durch Analogisieren und Verstärken des kombinierten integrierten Differenzwertes.

4. Vorrichtung zur Steuerung der Entfernung eines Kopfes (161), der an einem Ende von einer elastischen Aufhängung (105) von einem Festplattenantrieb gehalten ist, von der Oberfläche einer Platte, mit:
einem ersten Stellglied (701), das an einer Seite der Aufhängung (105) mit einem bestimmten Abstand von dem Kopf entfernt angeordnet ist, um die Biegung der Aufhängung (105) zu erfassen, die durch eine Veränderung der Entfernung bewirkt wird;
einem zweiten Stellglied (702) an der Aufhängung (105), das von dem Kopf (161) entfernt angeordnet ist;
einer Einrichtung zum Erzeugen eines Steuersignals in Reaktion auf die erfaßte Biegung sowie Zuführen des Steuersignals zu dem zweiten Stellglied (702), um die erfaßte Biegung auszugleichen und die Entfernung aufrechtzuerhalten;
**dadurch gekennzeichnet**, daß das zweite Stellglied (702) an der anderen Seite der Aufhängung (105) mit im wesentlichen dem gleichen Abstand von dem Kopf (102) entfernt angeordnet ist wie das erste Stellglied (701).

5. Vorrichtung nach Anspruch 4, bei der die Einrichtung zum Erzeugen eines Steuersignals aufweist:
eine Verstärkungsschaltung zum Verstärken und Ausgeben eines Ausgangssignals von dem ersten Stellglied (701) ;
eine Fehlerwertberechnungseinrichtung zum Berechnen eines Fehlerwertes aus der Differenz zwischen der Ausgabe von der Verstärkungsschaltung und einem FH-Offset-Wert;
einen Signal-Wahrheits-Verzögerungskompensator zur Wahrheits-Verzögerungskompensation der Ausgabe von der Fehlerwertberechnungseinrichtung; und
einen Verstärker zum Verstärken der Ausgabe des Signal-Wahrheits-Verzögerungskompensators, um das Steuersignal zur Verfügung zu stellen.

6. Vorrichtung nach Anspruch 4, bei der die Einrichtung zum Erzeugen eines Steuersignals aufweist:
eine Verstärkungsschaltung zum Verstärken und Ausgeben eines Ausgangssignals von dem ersten Stellglied (701);
einen A/D-Wandler (667) zum Digitalisieren des Ausgangssignals der Verstärkung;
eine Fehlerwertberechnungseinrichtung zum Berechnen eines Fehlerwertes aus der Differenz zwischen der Ausgabe von dem A/D-Wandler (667) und einem FH-Offset-Wert;
einen digitalen PID-Regler (669) zum Erzeugen eines Einstellsignals aus der Ausgabe der Fehlerwertberechnungseinrichtung;
einen D/A-Wandler (670) zum Konvertieren der Ausgabe des digitalen PID-Reglers (669) in ein analoges Signal; und
eine zweite Verstärkungsschaltung zum Verstärken der Ausgabe des D/A-Wandlers (670), um das Steuersignal zur Verfügung zu stellen.

7. Vorrichtung nach einem der Ansprüche 4-6, bei der das erste Stellglied (701) ein piezoelektrisches Polymer enthält, das an der oberen Seite der Aufhängung (105) angebracht ist.

8. Vorrichtung nach einem der Ansprüche 4-7, bei der das zweite Stellglied (702) eine piezoelektrische Keramik enthält, die an der unteren Seite der Aufhängung (105) angebracht ist.

9. Vorrichtung nach einem der Ansprüche 4-8, bei dem der Kopf (161) von dem flachen, sich verjüngenden Typ ist.

## Revendications

1. Procédé pour commander la distance séparant une tête (161) portée par une extrémité d'une suspension flexible (105) d'une unité de disque dur, de la surface d'un disque (106), le procédé comprenant:
la détection de la flexion de la suspension (105) provoquée par une modification dans ladite distance de séparation, au niveau d'un premier actionneur (701) positionné d'un côté de ladite suspension (105) à une certaine distance de ladite tête;
la production d'un signal de commande en réponse à ladite flexion détectée; et
l'application dudit signal de commande à un second actionneur (702) pour compenser ladite flexion détectée et maintenir ladite distance de séparation;
**caractérisé en ce que** ledit second actionneur (702) est positionné de l'autre côté de la suspension en étant séparé essentiellement par la même distance de ladite tête que l'est ledit premier actionneur (701).

2. Procédé selon la revendication 1, comprenant:
l'amplification d'un signal de sortie délivré par le premier actionneur (701) ;
le calcul d'une valeur d'erreur à partir de la différence entre le signal de sortie amplifié et une valeur de décalage FH;
la compensation du retard ou de la vérité de la valeur d'erreur par détection d'une différence de phase entre la valeur d'erreur et une valeur précédente; et
l'amplification du signal d'erreur compensé pour produire ledit signal de commande.

3. Procédé selon la revendication 1, comprenant:
l'amplification d'un signal de sortie provenant du premier actionneur (701) ;
la numérisation du signal de sortie amplifié;
l'intégration proportionnelle de la différence entre le signal numérisé et une valeur de décalage FH et la combinaison dans un rapport constant, de la valeur intégrée; et
la production dudit signal de commande par conversion sous forme analogique et amplification de la valeur de différence intégrée combinée.

4. Dispositif pour commander la distance séparant une tête (161) portée par une extrémité d'une suspension flexible (105) d'une unité de disque dur, de la surface d'un disque, le procédé comprenant:
un premier actionneur (701) positionné d'un côté de ladite suspension (105) à une certaine distance de ladite tête pour détecter la flexion de la suspension (105) provoquée par un changement dans ladite distance de séparation;
un second actionneur (702) situé sur ladite suspension (105) à distance de ladite tête (161);
des moyens pour produire un signal de commande en réponse à ladite flexion détectée et pour appliquer ledit signal de commande au second actionneur (702) pour compenser ladite flexion détectée et maintenir ladite distance de séparation;
**caractérisé en ce que** ledit second actionneur (702) est positionné de l'autre côté de la suspension (105) essentiellement à la même distance de ladite tête (101) que ledit premier actionneur (701).

5. Dispositif selon la revendication 4, dans lequel les moyens de production d'un signal de commande comprennent:
un circuit d'amplification pour amplifier et délivrer un signal de sortie provenant du premier actionneur (701);
des moyens de calcul d'une valeur d'erreur pour calculer une valeur d'erreur à partir de la différence entre le signal de sortie dudit circuit d'amplification et une valeur de décalage FH;
un compensateur de vérité-retard du signal pour une compensation de vérité-retard du signal de sortie desdits moyens de calcul de la valeur d'erreur; et
un amplificateur pour amplifier le signal de sortie dudit compensateur de vérité-retard du signal pour produire ledit signal de commande.

6. Dispositif selon la revendication 4, dans lequel les moyens pour produire le signal de commande comprennent:
un circuit d'amplification pour amplifier et délivrer un signal de sortie provenant dudit premier actionneur (701);
un convertisseur analogique/numérique (667) pour numériser le signal de sortie dudit amplificateur;
des moyens de calcul d'une valeur d'erreur pour calculer une valeur d'erreur à partir de la différence entre le signal de sortie dudit convertisseur analogique/numérique (667) et une valeur de décalage FH;
un dispositif de commande PID numérique (669) pour produire un signal d'ajustement à partir du signal de sortie dudit moyen de calcul de la valeur d'erreur;
un convertisseur numérique/analogique (670) pour convertir le signal de sortie dudit dispositif de commande PID numérique (669) en un signal analogique; et
un second circuit amplificateur pour amplifier le signal de sortie du convertisseur numérique/analogique (670) pour produire ledit signal de commande.

7. Dispositif selon l'une quelconque des revendications 4-6, dans lequel ledit premier actionneur (701) comprend un polymère piézoélectrique fixé au côté supérieur de ladite suspension (105).

8. Dispositif selon l'une quelconque des revendications 4-7, dans lequel ledit second actionneur (702) comprend une céramique piézoélectrique fixée au côté inférieur de ladite suspension (105).

9. Dispositif selon l'une quelconque des revendications 7-8, dans lequel ladite tête (161) est du type plat de forme rétrécie.
